# EUROPEAN PATENT SPECIFICATION

(11) **EP 3 878 611 B1**
(45) Date of publication and mention of the grant of the patent: **18.12.2024**
(21) Application number: 20162144.8
(22) Date of filing: 10.03.2020
(51) Int. Cl.: B25J 21/00, B65G 1/04, B23P 21/00

(54) **PARTIALLY AUTOMATED MANUFACTURING CELL**
TEILWEISE AUTOMATISIERTE HERSTELLUNGSZELLE
CELLULE DE FABRICATION PARTIELLEMENT AUTOMATISÉE

(43) Date of publication of application: 15.09.2021
(73) Proprietor: Hochschule für angewandte Wissenschaften Landshut, 84036 Landshut (DE)
(72) Inventor: SCHNEIDER, Markus, 84036 Landshut (DE); BÜTTNER, Konstantin, 84034 Landshut (DE); RITTBERGER, Sven, 80798 München (DE); ETTENGRUBER, Tobias, 94436 Simbach (DE)
(74) Representative: Koplin, Moritz

(56) References cited:
- EP-A1- 0 361 178
- DE-U1- 202017 005 563
- US-A- 5 542 168
- US-A1- 2006 269 384

## Description

### Field

The present disclosure relates to a partially automated manufacturing cell. In particular, the present disclosure relates to supplying items to workstations by an automated warehouse.

### Background

Product manufacturing such as product assembly may involve a multitude of consecutive steps in which elements are added to the product. Provisioning said elements may involve storage and retrieval which is also commonly referred to as warehousing. To cope with a large number of elements, warehousing may be automated.

EP0361178 (A1) shows a plant for robot operations comprising a robot and a plurality of workstations served by the robot, wherein an operating arm of the robot is movable to each workstation.

DE202017005563U1 is directed at building a cage for a robot based on switch cabinets.

US5542168A relates to assembling a plurality of parts using a robot employing a rotatable pallet for holding an array of the parts. Said rotatable pallet is held in place on the robot wrist head, which moves the pallet through a plurality of stationary work-stations located within the operating envelope of the robot, and rotates the pallet at each work-station to index the pallet and to present it to the work-station for an operation on a specific part or parts.

US2006269384A1 relates to a work cell which includes a three-dimensional positioning robot positioned adjacent a plurality of operation stations.

### Summary

The present disclosure provides a partially automated manufacturing cell and a method of supplying items to workstations of a manufacturing cell, arranged around an automated warehouse. In particular, the automated warehouse may be integrated into the manufacturing cell.

The partially automated manufacturing cell comprises a robot, a first workstation, a second workstation and a third workstation, wherein said workstations are arranged around said robot and said robot is configured to supply first items to said first workstation, second items to said second workstation and third items to said third workstation. The partially automated manufacturing cell may comprise a first store and the robot may retrieve said items from said first store. The robot and the first store may form an automated warehouse which is integrated into the manufacturing cell. In particular, the first store and the workstations may comprise a shared frame making the cell an integrated unit. The robot may also primarily or exclusively serve the workstations of the manufacturing cell by supplying said items. Notably, supplying said items may also include picking or collecting items from a periphery of the manufacturing cell. However, even if the robot is movable, an area within which the robot, particularly the robot's base and/or the robot's center of mass, operates may be limited to a space within (or physically occupied by) the manufacturing cell, i.e. a space within an area surrounded by the workstations.

The term "workstation", as used throughout the description and the claims, particularly refers to a place where work is to be performed. A workstation may be provided with tools that are required to perform the work. Furthermore, a workstation may comprise a desk and/or a seat for a human operator (e.g., a worker). In this regard, the formulation "partially automated", as used throughout the description and the claims, particularly refers to the involvement of manual labor (for example, work performed by said human operators). Moreover, the term "manufacturing cell", as used throughout the description and the claims, particularly refers to a setting in which product parts or unfinished products are passed from one workstation to the other, wherein different steps are performed on a product part or an unfinished product, at the different workstations. As the steps may be based on each other, an order may be given in which the product parts or unfinished products are passed from one workstation to the other. However, it may also be that the same step is performed at some or all of the workstations of a manufacturing cell and that the product parts or unfinished products are routed through only one or not all of the workstations of the manufacturing cell.

Furthermore, the term "robot", as used throughout the description and the claims, particularly refers to an assembly of serially connected links and joints that form an open kinematic chain. The robot may comprise a base, a shoulder, an arm and an end effector (e.g., a gripper) for retrieving said items. Moreover, the robot may unload incoming items from a conveyor or another robot or vehicle, store and retrieve the items, and as the case may be, assist in the manufacturing. For example, instead of simply supplying an item, the robot may mount the item to an assembly which has been prepared or which is then worked on by the human operator. Moreover, the robot may cooperate with the human operator during a manufacturing step. This may also involve a scenario in which both, the robot and the human operator are in physical contact with the item at the same time. In addition, the robot may be provided with several independently operable kinematic chains and/or the manufacturing cell may be provided with multiple robots. The robots may communicate with each other to decide on which task is performed by which robot. For example, a first robot may unload incoming items from a conveyor, another robot or a vehicle while a second robot supplies the workstations with items.

Moreover, the term "items", as used throughout the description and the claims, particularly refers to assembly parts which are part of the final product. However, it may also refer to tools/objects which are used in the production process but do not form part of the final product. Furthermore, the formulation "arranged around", as used throughout the description and the claims, particularly refers to a setting in which the workstations are arranged along a (substantially) closed curve with a convex outer side which (substantially) encircles the robot and which limits the range of movement of a base of said robot, especially if the robot is movable. Notably, other machines than a robot may be used to establish an automated warehouse.

Having the workstations arranged around an automated warehouse reduces the distance between the warehouse and the workstations.

Said first workstation comprises a first rack for a plurality of first storage bins and said robot is configured to supply said first storage bins containing said first items to said first rack, or to supply said first items to said first storage bins in said first rack.

In this regard, the term "rack", as used throughout the description and the claims, particularly refers to a structure in which a multitude of storage bins can be placed. The "rack" may comprise one or more inclined shelves (which may be provided with rollers for friction reduction) to direct storage bins (closer) to an operator of a workstation to which the rack is assigned. Furthermore, the term "storage bin", as used throughout the description and the claims, particularly refers to a container in which items can be placed and stored.

Said robot may be configured to access said first rack from a backside of said first rack and said first rack may be accessible to an operator of the first workstation from a frontside of said first rack.

In this regard, the term "frontside", as used throughout the description and the claims, particularly refers to a side which the operator faces when working at the workstation. Furthermore, the term "backside", as used throughout the description and the claims, particularly refers to a side which faces away from the operator, when the operator works at the workstation. Depending on the design of the manufacturing cell, the backside may be facing a center of the manufacturing cell. For example, if the manufacturing cell has a circular shape, the backside may face the center of the circle.

By loading the rack from the backside, interference between the robot and the operator can be prevented.

Said first workstation may comprise a first work desk and said first rack may extend above said first work desk.

This may increase accessibility for both, the operator and the robot.

Said robot may be configured to withdraw said first items from a first store, wherein said first store may be arranged below said first work desk and/or above said first rack.

In this regard, the terms "above/below", as used throughout the description and the claims, refer to a vertical range in which an object is placed but shall not be construed as implying that objects which are placed above or below each other do fully (or even partially) overlap when seen in a vertical direction, although such scenarios are contemplated. Moreover, there may be a vertical space between objects which are placed above or below each other, although scenarios where there is no (or substantially no) vertical space between objects which are placed above or below each other is also contemplated.

Said first workstation and said second workstation may be arranged side-by-side.

In this regard, the term "side-by-side", as used throughout the description and the claims, particularly refers to a setting in which a first edge of the first workstation abuts a second edge of the second workstation. For example, desks of different workstations may abut each other. In another example, tabletops of two or more workstations may be integrally formed.

This may facilitate passing the product parts or unfinished products between the first and the second workstation.

Said first workstation and said third workstation may be arranged at opposite sides of said robot.

Accordingly, if the robot is able to turn around its vertical axis, the first workstation and the third workstation may be accessed by the robot without a need for linearly moving the robot, particularly the robot's base. For example, the robot may comprise a link which is connected to the base by a rotary joint that allows for a rotation of the link around a vertical axis.

The partially automated manufacturing cell may further comprise a fourth workstation. Said robot may be configured to supply fourth items to said fourth workstation. Said first workstation may be arranged above said fourth workstation, or said fourth workstation may be arranged above said first workstation.

Said robot may have a base which is stationary, or horizontally immovable. For example, the base may be vertically movable.

According to another embodiment of the invention, the robot may have a base which is (also) horizontally movable, wherein the range of movability of said base is limited by a line connecting the workstations arranged around said robot.

A first distance between said first workstation and said base may be substantially equal to a second distance between said second workstation and said base.

Said workstations and one or more further workstations of the cell may form a ring around said robot.

In this regard, the term "ring", as used throughout the description and the claims, particularly refers to a shape with an outer edge and an inner edge that can be described by closed curves. The curves may (but do not have to) be symmetric to a central axis (i.e. concentric).

Said robot may be configured to be supplied with said items through a radial or axial conveyor and to store said items within said ring before supplying said items to said workstations.

A radial conveyor may transport items or storage bins form a periphery of the manufacturing cell to the inner edge (of the ring) for the items or storage bins to be picked up by the robot and/or vice versa. Moreover, although the radial conveyor may extend substantially in a horizontal direction, the radial conveyor may be inclined (for example, by less than 30°, preferably by less than 15°) for the items or storage bins to slide (e.g., over transport rollers) along the radial direction (from the periphery to the inner edge and/or from the inner edge to the periphery). Instead of (or in addition to) a radial conveyor, there may be a horizontal conveyor which transports items or storage bins form a periphery of the manufacturing cell to the inner edge (of the ring) for the items or storage bins be picked up by the robot and/or vice versa. Moreover, although the horizontal conveyor may extend substantially in a horizontal direction, the horizontal conveyor may be inclined (for example, by less than 30°, preferably by less than 15°) for the items or storage bins to slide (e.g., over transport rollers) along the horizontal direction (from the periphery to the inner edge and/or from the inner edge to the periphery).

Likewise, an axial conveyor may transport items or storage bins form a periphery of the manufacturing cell to the inner edge (of the ring) where the items or storage bins may be picked up by the robot and/or vice versa. Instead of (or in addition to) an axial conveyor, there may be a vertical conveyor which transports items or storage bins form a periphery of the manufacturing cell to the inner edge (of the ring) where the items or storage bins may be picked up by the robot and/or vice versa. Moreover, although the vertical conveyor may extend substantially in a vertical direction, the vertical conveyor may be inclined (for example by less than 15°).

The local warehouse decouples the manufacturing cell from a central warehouse. Notably, the decoupling does not necessarily mean that there may be no transport of items between the manufacturing cell and the central warehouse but that the local warehouse may serve as a buffer which reduces the interdependence (and the required degree of synchronization) between the warehouses.

A system may comprise at least two manufacturing cells, wherein said rings form a figure of eight.

Accordingly, the cell edges may abut each other, which may facilitate passing the product parts or unfinished products between the cells. In addition, it may allow for a more compact placement. In particular, the manufacturing cells may be shaped as a pentagon, hexagon, heptagon, octagon, etc. and may be arranged to have two (or more) parallel edges.

The method of supplying items to workstations of a manufacturing cell, arranged around an automated warehouse, comprises storing said items in said warehouse, detecting that a workstation of said workstations requires one or more of said stored items and supplying the required one or more items to said workstation.

Said workstation comprises a rack for a plurality of storage bins and said supplying comprises supplying said storage bins containing said stored items to said rack, or supplying said stored items to said storage bins in said rack.

The workstations may be arranged along a substantially closed curve with a convex outer side.

Notably, all features of the manufacturing cell may be features of the method and vice versa.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 shows a schematic top view of a manufacturing cell according to a first example.
Fig. 2 shows a schematic top view of a manufacturing cell according to a second example.
Fig. 3 shows a schematic top view of a manufacturing cell according to a third example.
Fig. 4 shows a schematic top view of a manufacturing cell according to a fourth example.
Fig. 5 shows a schematic front view of a workstation according to an example.
Fig. 6 illustrates a modification of the workstation of Fig. 5.
Fig. 7 schematically illustrates a radial conveyor for supplying the robot with items.
Fig. 8 shows a perspective view of a manufacturing cell in accordance with Fig. 7.
Fig. 9 illustrates an alternative to the radial conveyor of Fig. 7.
Fig. 10 shows a perspective view of a manufacturing cell in accordance with Fig. 9.
Fig. 11 shows a perspective view of an axial conveyor for supplying the robot with items.
Fig. 12 shows a perspective view of a manufacturing cell with additional storage capacity.
Fig. 13 shows a perspective view of horizontally interconnected manufacturing cells.
Fig. 14 shows a perspective view of vertically interconnected manufacturing cells.
Fig. 15 shows a flowchart of the method.

Notably, the drawings are not drawn to scale and unless otherwise indicated, they are merely intended to conceptually illustrate the structures and procedures described herein.

### Description of Embodiments

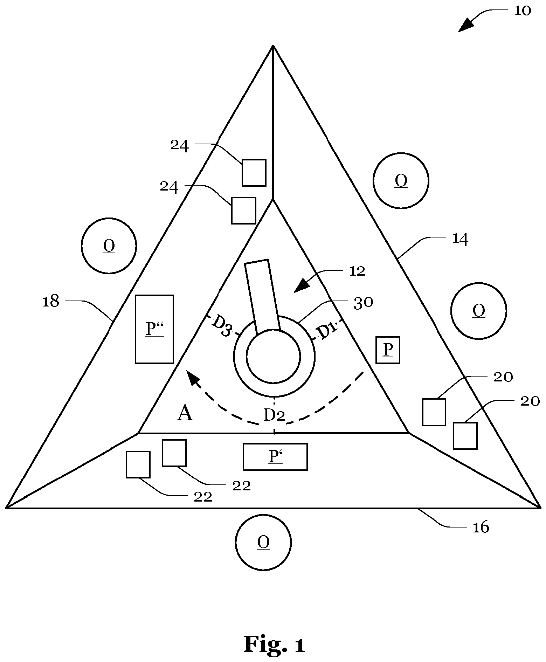

Fig. 1 shows a schematic top view of manufacturing cell 10. Manufacturing cell 10 comprises robot 12 and workstations 14, 16 and 18. Workstations 14, 16 and 18 are arranged around robot 12. Each of workstations 14, 16 and 18 may be occupied by one or more operators O who add items 20, 22 and 24 to partially assembled products P, P' and P" (or perform another operation for which items 20, 22 and 24 are required). Once the manufacturing step is completed at workstation 14, 16 or 18, the partially assembled products P, P' and P" (or the otherwise processed items 20, 22 and 24) may be passed clockwise to the next one of workstations 16 and 18, respectively (indicated in Fig. 1 by the broken-line arrow), or transported to another manufacturing cell 10 or any other unit (not shown). In other examples, the partially assembled products P, P' and P" (or the otherwise processed items 20, 22 and 24) may also be passed counterclockwise to the next one of workstations 16 and 18, respectively. According to an embodiment of the invention, the robot, particularly an end effector (e.g. a gripping or suction device) coupled to said robot, may be used to pass the partially assembled products P, P' and P" (or the otherwise processed items 20, 22 and 24) from a first workstation 14 to a second workstation 16, both workstations 14, 16 being assigned to one single manufacturing cell 10 and/or from a workstation of a first manufacturing cell to a workstation of a second manufacturing cell.

If workstation 14 runs out or is about to run out of items 20, which are required in the manufacturing process, robot 12 may replenish the stock of items 20 available at workstation 14. If workstation 16 runs out or is about to run out of items 22, which are required in the manufacturing process, robot 12 may replenish the stock of items 22 available at workstation 16. If workstation 18 runs out or is about to run out of item 24, which is required in the manufacturing process, robot 12 may replenish the stock of items 24 available at workstation 18. If different types of items 20, 22 and 24 are required at any one of workstations 14, 16 or 18, robot 12 may supply all or only some of said types to workstations 14, 16 and 18, respectively. If there are one or more additional robots (not shown) different types of items 20, 22 and 24 may be supplied by different robots. In other words, various modifications may be made to the example shown in Fig. 1 which is only merely intended to conceptually illustrate that items 20, 22 and 24 are supplied to workstations 14, 16 or 18 by robot 12. Replenishment may be triggered manually (by the operators O) or automatically if a sensor measurement reveals that one of workstations 14, 16 and 18 runs out or is about to run out of items 20, 22 and 24, respectively.

For example, a weight of a stock of items 20, 22 and 24 available at workstations 14, 16 and 18, respectively, may be measured, a height of a stock of items 20, 22 and 24 available at workstations 14, 16 and 18, respectively, may be measured, or the stock of items 20, 22 and 24 may be visually inspected. Furthermore, a need for replenishment may be determined based on partially assembled products P, P' and P" (or otherwise processed items 20, 22 and 24). Moreover, instead of replenishing a stock of items 20, 22 or 24 if one of workstations 14, 16 and 18 runs out or is about to run out of items 20, 22 and 24, respectively, items 20, 22 and 24 may be constantly supplied by robot 12 to workstations 14, 16 and 18, respectively. The supply rate of items 20, 22 and 24 to workstations 14, 16 and 18 may be fixed, based on measurements regarding the available stock, or based on a number of partially assembled products P, P' and P" (or otherwise processed items 20, 22 and 24), respectively.

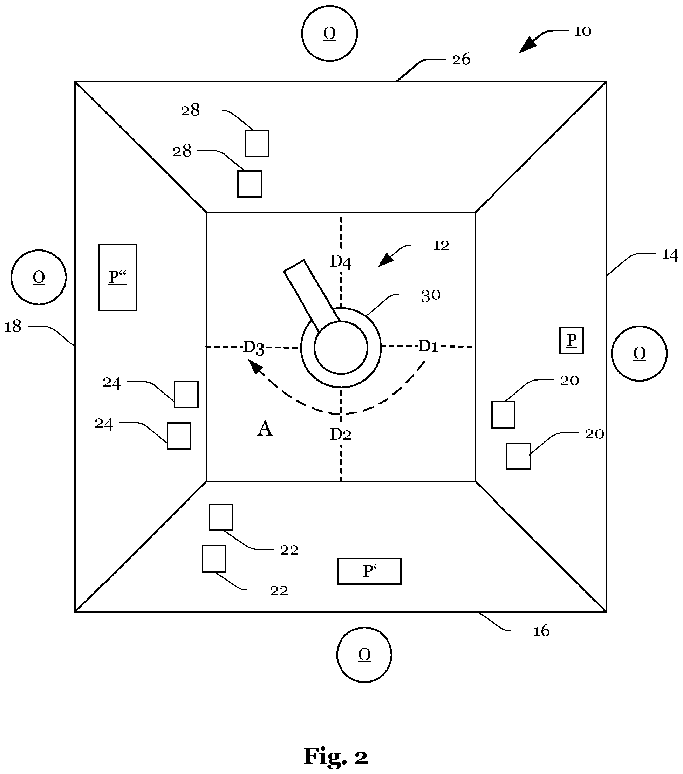

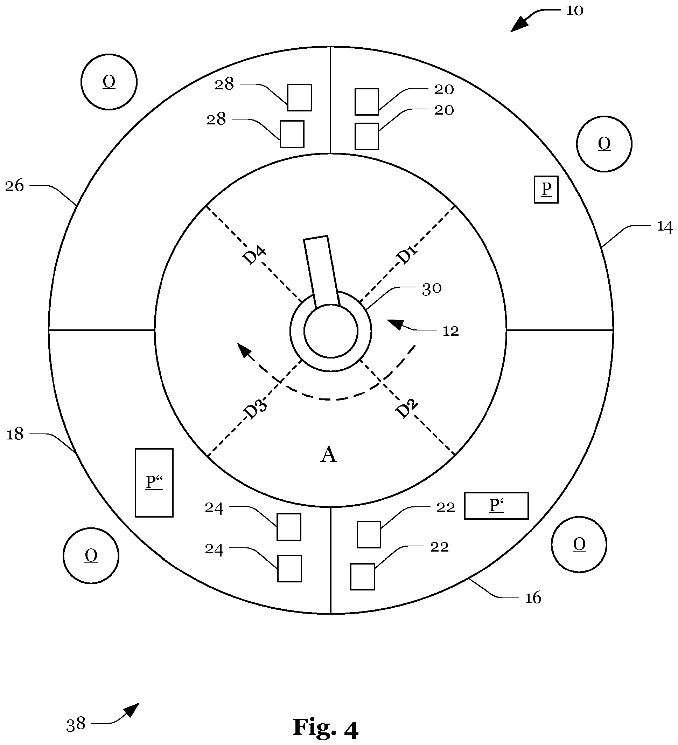

As shown in Fig. 2, Fig. 3 and Fig. 4, manufacturing cell 10 may come in various shapes (when seen in top view) including, but not limited to, a substantially convex shape such as a convex polygon shape (triangular, rectangular, etc.) and a convex rounded shape (ellipsoid, circular, etc.). The shape of manufacturing cell 10 may be defined by the outer edges of workstations 14, 16 and 18 projected in a horizontal plane. Manufacturing cell 10 may have a modular design, wherein a shape of workstations 14, 16 and 18 projected in the horizontal plane may be substantially identical. Manufacturing cell 10 may be comprised of a rigid (rod) frame and boards (e.g., tabletops) mounted to the frame, wherein each of workstations 14, 16 and 18 comprises boards of substantially the same width, length and height.

Moreover, manufacturing cell 10 may have one or more additional workstations 26 which are, analogously to workstations 14, 16, and 18, supplied with items 28 by robot 12. As shown in Fig. 2, Fig. 3 and Fig. 4, workstations 14 and 18 may be arranged at opposite sides of robot 12. If workstations 14 and 18 are arranged at opposite sides of robot 12, robot 12 may be enabled to rotate around a vertical axis (extending through base 30). Moreover, workstations 14 and 16 may be placed side-by-side to facilitate passing partially assembled products P and P' (or otherwise processed items 20 and22) from one workstation 14 and 16 to the other workstation 16 and 18. Passing partially assembled products P, and P' (or otherwise processed items 20 and 22) from one workstation 14 and 16 to the other workstation 16 and 18 may be performed manually by the operators O, through conveyors (not shown) or - as already mentioned above - by robot 12. For example, there may be an inclined or powered roller track which guides the partially assembled products P and P' (or otherwise processed items 20 and 22) from one workstation 14 and 16 to the other workstation 16 and 18. A sensor (not shown) along a conveyor (not shown) may be used to determine the number of partially assembled products P and P' (or otherwise processed items 20 and 22).

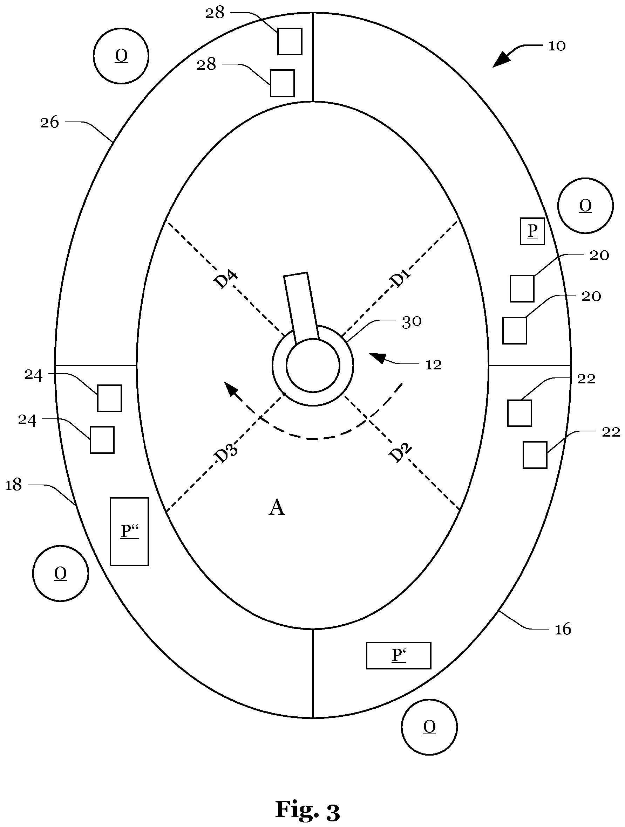

If distances D1, D2, D3 and D4 (only for Fig. 2, Fig. 3 and Fig. 4) between base 30 of robot 12 and workstations 14, 16, 18 and 26 are substantially equal, as shown in Fig. 1, Fig. 2, Fig. 3 and Fig. 4, base 30 may be horizontally immovable or stationary. If distances D1, D2, D3 and D4 (only for Fig. 2, Fig. 3 and Fig. 4) between base 30 of robot 12 and workstations 14, 16, 18 and 26 are not substantially equal, base 30 may be horizontally movable within area A which is surrounded by workstations 14, 16, 18 and 26. Moreover, if area A is too large for robot 12, base 30 may be horizontally movable within area A. For example, base 30 may be linearly movable along the semi-major axes of area A in manufacturing cell 10 of Fig. 3.

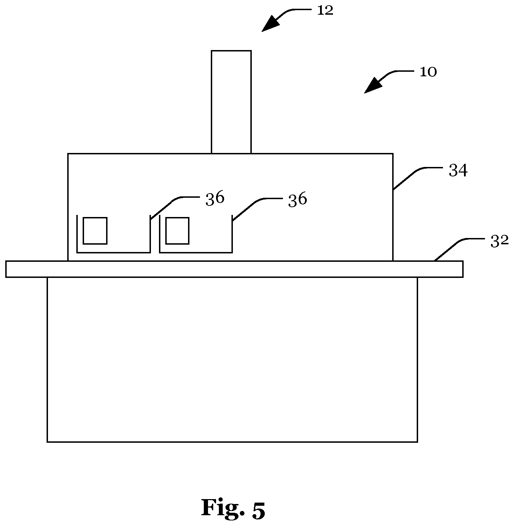

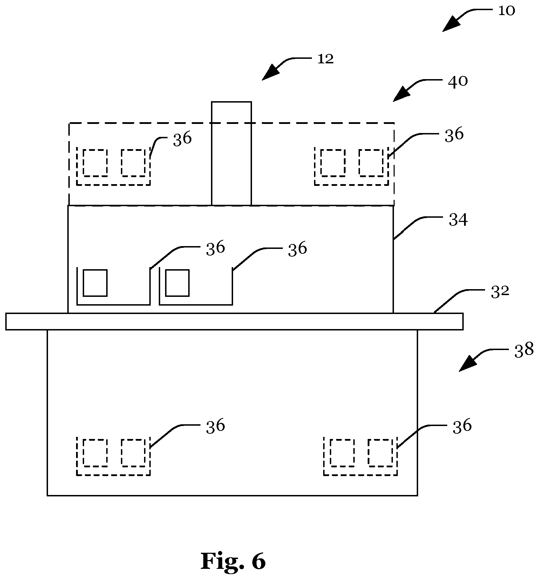

Fig. 5 shows a schematic front view of workstations 14, 16, 18 and 26. Each of workstations 14, 16, 18 and 26 comprises work desk 32 and rack 34. Rack 34 has one or more (inclined) shelves (not shown) for storage bins 36. When supplying workstation 14, 16, 18 or 26 with items 20, 22, 24 or 28, respectively, robot 12 may retrieve items 20, 22, 24 or 28, or storage bins 36 containing items 20, 22, 24 or 28 from store 38, which is arranged below work desk 32, or from store 40, which is arranged above rack 34, as schematically illustrated in Fig. 6. Moreover, items 20, 22, 24 or 28, or storage bins 36 containing items 20, 22, 24 or 28 may be retrieved from a store (not shown) which is arranged in area A. If area A is not used as storage space, less restrictions may apply as regards the trajectories along which an end-effector of robot 30 may travel.

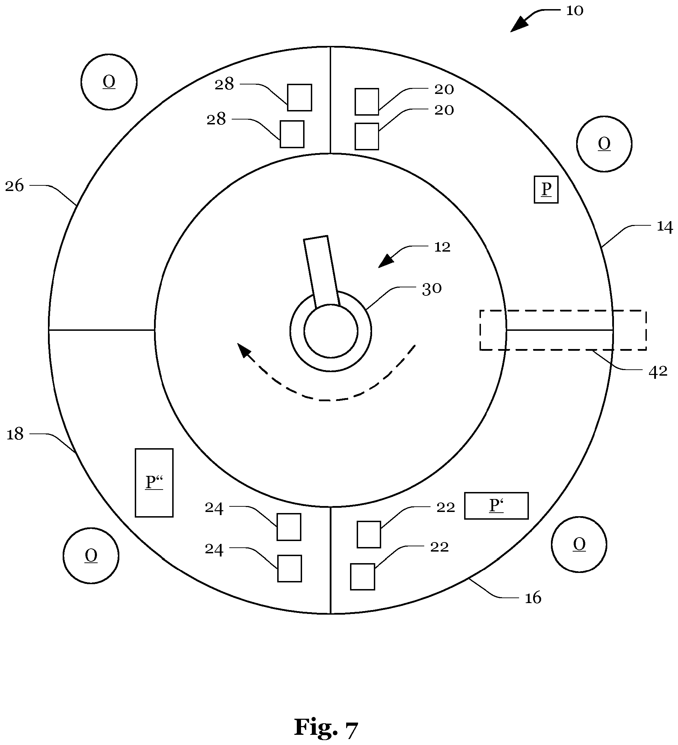

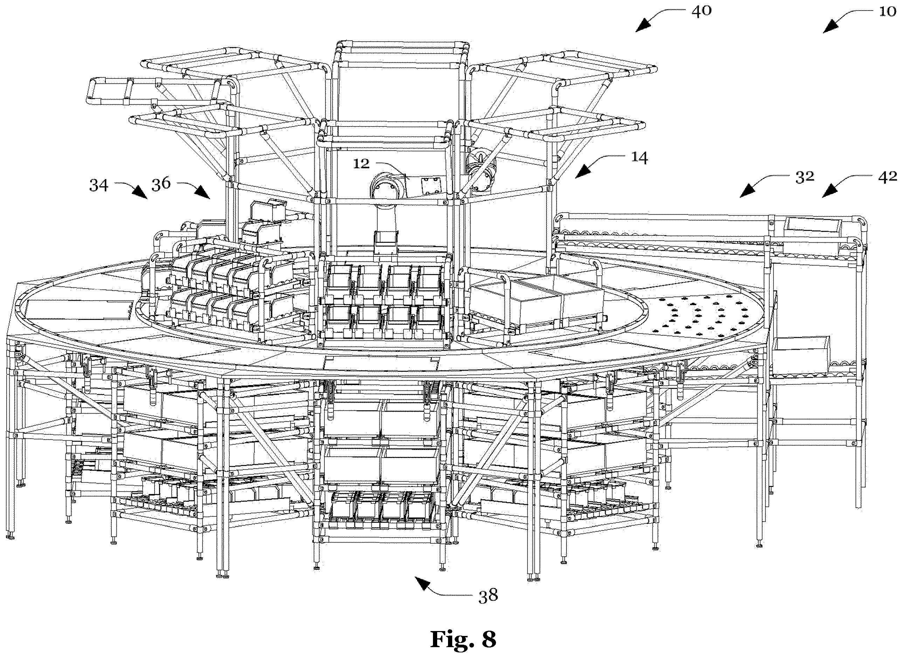

Fig. 7 schematically illustrates a radial conveyor 42 for supplying robot 12 with items 20, 22, 24 or 28 or storage bins 36 containing items 20, 22, 24 or 28. As shown in Fig. 8, radial conveyor 42 may allow robot 12 to exchange items 20, 22, 24 or 28 or storage bins 36 (containing items 20, 22, 24 or 28) with another entity outside of manufacturing cell 10. For example, another conveyor (not shown), an (autonomous) robot (not shown) or a vehicle (not shown) may provide manufacturing cell 10 with items 20, 22, 24 or 28 or storage bins 36 containing items 20, 22, 24 or 28 upon demand by robot 12, by another entity such as a local control unit (i.e., a control unit placed in or assigned to manufacturing cell 10; not shown) or a central control unit (not shown) or in accordance with a fixed schedule. As shown in Fig. 8, manufacturing cell 10 may comprise a frame made of interconnected rods. The frame supports a plurality of tabletop segments that are placed side-by-side on the frame. The frame also supports shelves for storage bins 36 containing items 20, 22, 24 or 28. In addition, first store 38 and 40 is integrated into (or forms part of) the structure supporting the tabletops and storage bins 36 containing items 20, 22, 24 or 28. Robot 12 which is arranged at the center of manufacturing cell 10, is rotatable around a vertical axis and comprises several (rotary) joints and links and an end effector for handling storage bins 36 and/or items 20, 22, 24 or 28. From the periphery to the center of manufacturing cell 10, there is a step (in height) at the intersection between the tabletops and the shelves for storage bins 36.

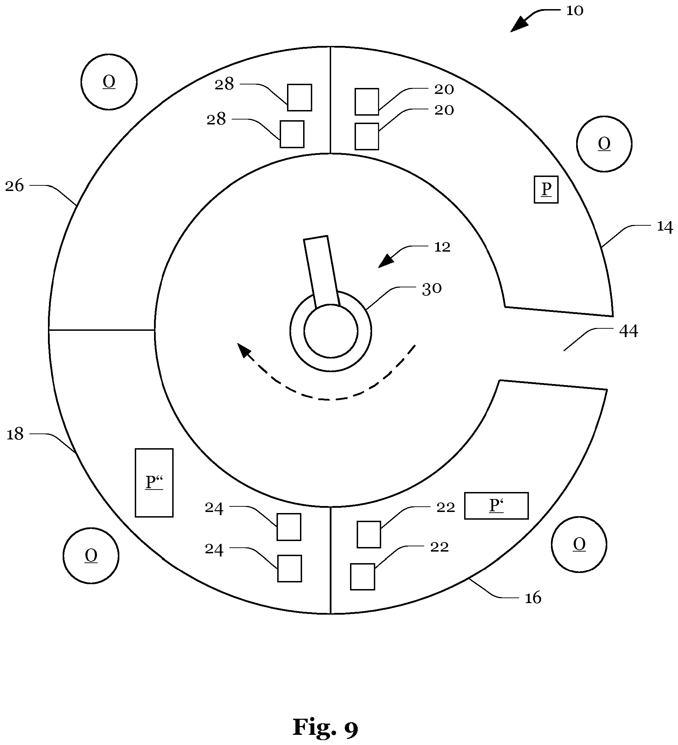

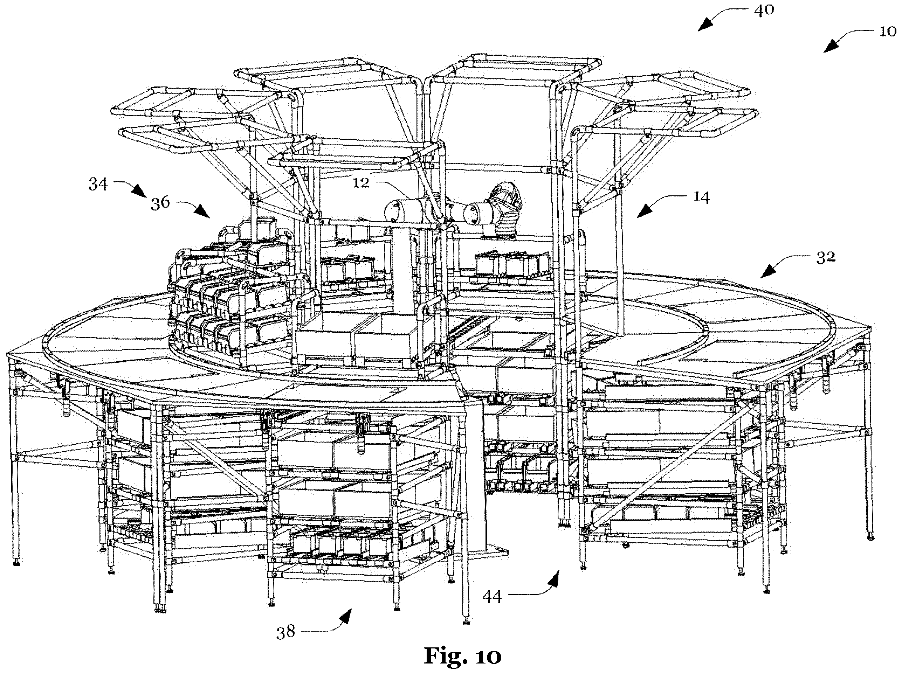

Fig. 9 and Fig. 10 illustrate an alternative to radial conveyor 42 of Fig. 7. In Fig. 9 and Fig. 10, radial conveyor 42 is replaced by passage 44. Passage 44 may allow an (autonomous) robot (not shown) to provide items 20, 22, 24 or 28 or storage bins 36 containing items 20, 22, 24 or 28 directly to robot 12. Moreover, passage 44 may facilitate accessing robot 12 for maintenance and repair. As shown in Fig. 9, the width of passage 44 may be substantially constant when advancing from the periphery to the inner edge of manufacturing cell 10. Moreover, as shown in Fig. 10, the width of passage 44 may also (steadily) decline when advancing from the periphery to the center of manufacturing cell 10.

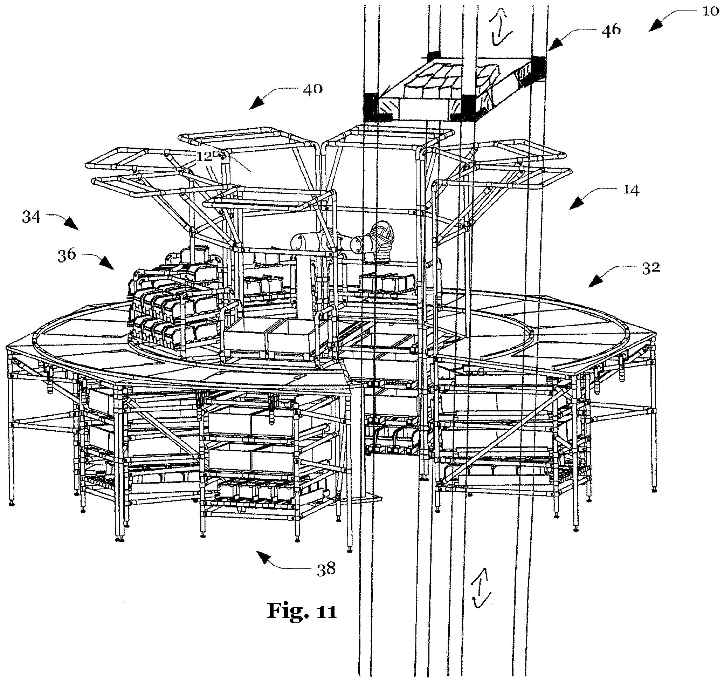

As shown in Fig. 11, vertical conveyor 46 may be used to supply items 20, 22, 24 or 28 directly to robot 12. Vertical conveyor 46 may serve several vertically stacked manufacturing cells 10 or provide items 20, 22, 24 or 28 or storage bins 36 containing items 20, 22, 24 or 28 from a store (not shown) which is established above or below manufacturing cell 10. For example, manufacturing cell 10 maybe placed in a building with multiple stories and a store (not shown) from which items 20, 22, 24 or 28 or storage bins 36 containing items 20, 22, 24 or 28 are retrieved, may be established in a story above or below a story in which manufacturing cell 10 is located. When vertical conveyor 46 supplies items 20, 22, 24 or 28 or storage bins 36 containing items 20, 22, 24 or 28 to manufacturing cell 10, robot 12 may pick items 20, 22, 24 or 28 or storage bins 36 containing items 20, 22, 24 or 28 from conveyor 46 and store items 20, 22, 24 or 28 or storage bins 36 containing items 20, 22, 24 or 28 in one of stores 38 and 40 of manufacturing cell 10. Stores 38 and/or 40 (which are assigned to manufacturing cell 10) and robot 12 (which is enabled to store and retrieve store items 20, 22, 24 or 28 or storage bins 36 containing items 20, 22, 24 or 28) form a (private) automated warehouse of manufacturing cell 10.

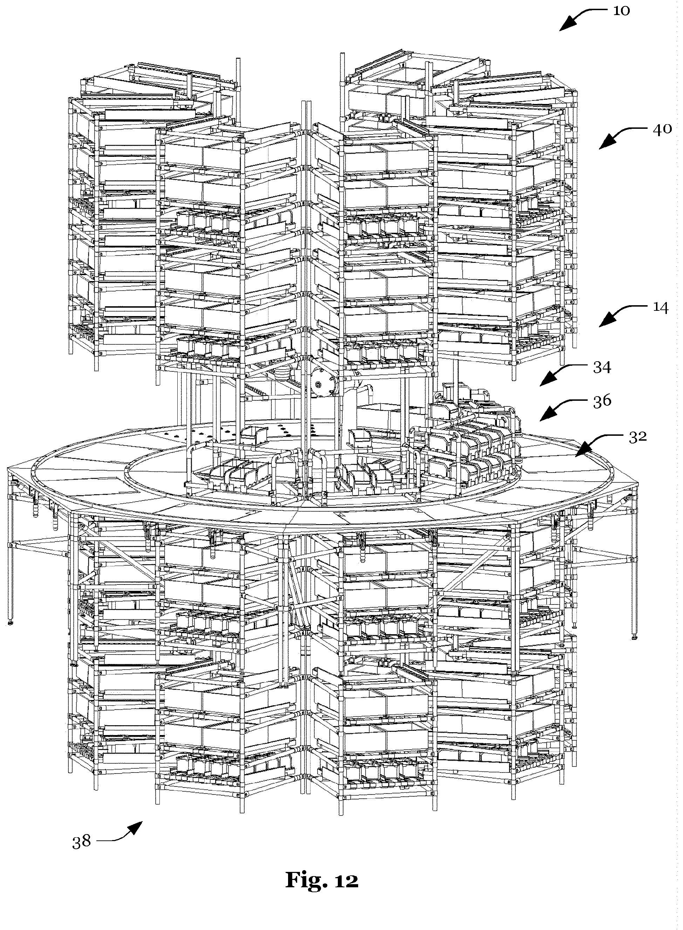

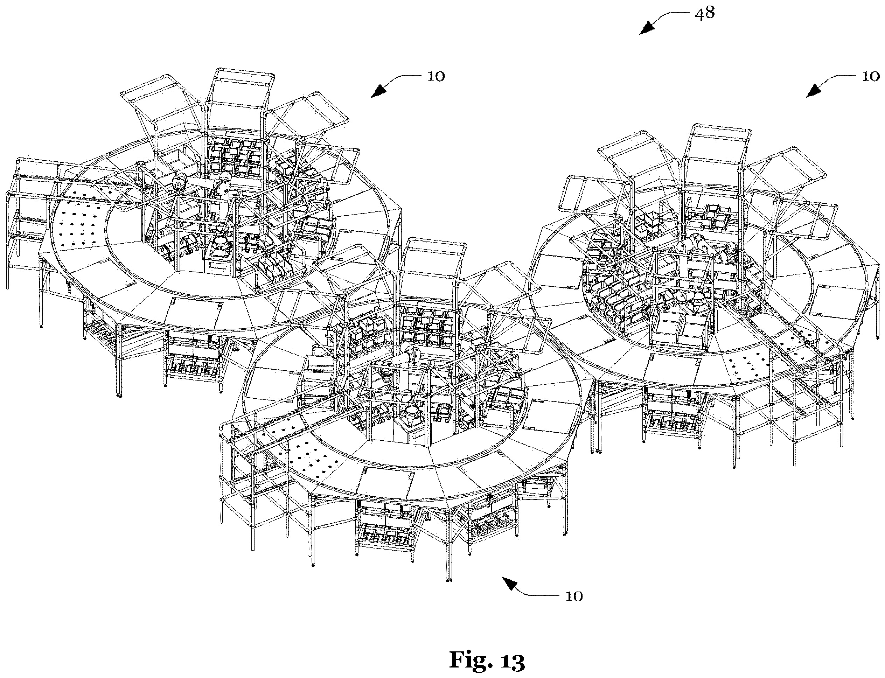

As shown in Fig. 12 additional storage capacity may be provided by extending manufacturing cell 10 below a floor level (not shown) or by adding store capacity above work desk 32 to manufacturing cell 10. For example, manufacturing cell 10 may extend up to a ceiling of a building in which manufacturing cell 10 is placed. Moreover, as shown in Fig. 13, a system 48 may comprise several manufacturing cells 10 that are placed adjacent to each other, such that two manufacturing cells 10 form a figure of eight. This facilitates passing partially assembled products P, P' and P" (or otherwise processed items 20, 22 and 24) between manufacturing cells 10.

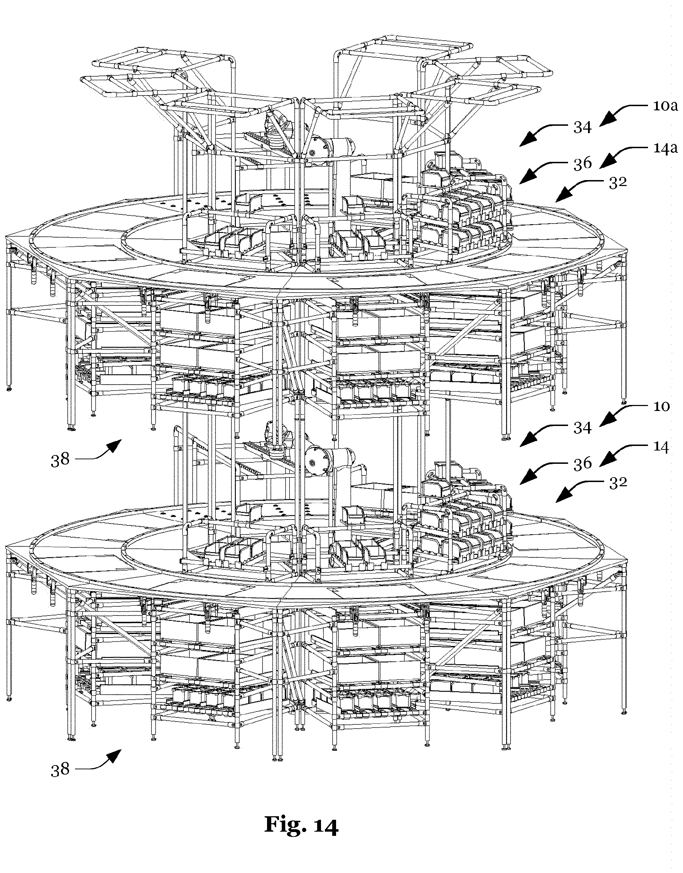

Fig. 14 shows a perspective view of several vertically interconnected manufacturing cells 10, 10a. In vertically interconnected manufacturing cells 10, 10a, workstations 14 and 14a are placed above each other. Manufacturing cells 10, 10a may each be provided with robot 12 (as shown in Fig. 14) or share one robot 12 which has a vertically movable base 30.

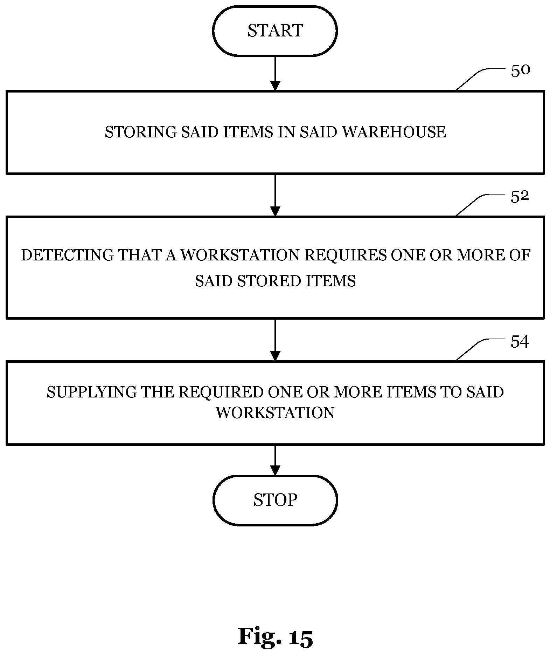

Fig. 15 shows a flowchart of the method. The method starts at block 50 with storing items 20, 22, 24, 28 in said warehouse. At block 52, it is detected that workstation 14, 16, 18 or 26 requires one or more of stored items 20, 22, 24 or 28, respectively. At block 54, one or more items 20, 22, 24 and 28 are supplied to workstation 14, 16, 18 and 26, respectively.

### Reference Signs List

- 10: manufacturing cell
- 10a: manufacturing cell
- 12: robot
- 14: workstation
- 14a: workstation
- 16: workstation
- 18: workstation
- 20: item
- 22: item
- 24: item
- 26: workstation
- 28: item
- 30: base
- 32: work desk
- 34: rack
- 36: storage bin
- 38: store
- 40: store
- 42: conveyor
- 44: passage
- 46: conveyor
- 48: system
- 50: step
- 52: step
- 54: step
- A: area
- D1: distance
- D2: distance
- D3: distance
- D4: distance
- O: operator
- P: product
- P': product
- P": product

## Claims

1. A partially automated manufacturing cell (10), comprising:
a robot (12);
a first workstation (14);
a second workstation (16); and
a third workstation (18);
wherein said workstations (14, 16, 18) are arranged around said robot (12); and
said robot (12) is configured to supply first items (20) to said first workstation (14), second items (22) to said second workstation (16) and third items (24) to said third workstation (18);
**characterized in that**
said first workstation (14) comprises a first rack (34) for a plurality of first storage bins (36) and wherein said robot (12) is configured to supply said first storage bins (36) containing said first items (20) to said first rack (34), or to supply said first items (20) to said first storage bins (36) in said first rack (34).

2. The partially automated manufacturing cell (10) of claim 1, wherein said robot (12) is configured to access said first rack (34) from a backside of said first rack (34) and said first rack (34) is accessible to an operator (O) of the first workstation (14) from a frontside of said first rack (34).

3. The partially automated manufacturing cell (10) of claim 2, wherein said first workstation (14) comprises a first work desk (32) and said first rack (34) extends above said first work desk (32).

4. The partially automated manufacturing cell (10) of claim 3, wherein said robot (12) is configured to withdraw said first items (20) from a first store (38, 40), wherein said first store (38, 40) is arranged below said first work desk (32) and/or above said first rack (34).

5. The partially automated manufacturing cell (10) of any one of claims 1 to 4, wherein said first workstation (14) and said second workstation (16) are arranged side-by-side.

6. The partially automated manufacturing cell (10) of any one of claims 1 to 5, wherein said first workstation (14) and said third workstation (18) are arranged at opposite sides of said robot (12).

7. The partially automated manufacturing cell (10) of any one of claims 1 to 6, further comprising:
a fourth workstation (14a);
wherein said robot (12) is configured to supply fourth items to said fourth workstation (14a); and
wherein said first workstation (14) is arranged above said fourth workstation (14a), or said fourth workstation (14a) is arranged above said first workstation (14).

8. The partially automated manufacturing cell (10) of any one of claims 1 to 7, wherein said robot (12) has a base (30) which is stationary, or horizontally immovable.

9. The partially automated manufacturing cell (10) of claim 8, wherein a first distance (D1) between said first workstation (14) and said base (30) is substantially equal to a second distance (D2) between said second workstation (16) and said base (30).

10. The partially automated manufacturing cell (10) of any one of claims 1 to 9, wherein said workstations (14, 16, 18) and one or more further workstations (26) of said cell (10) form a ring around said robot (12).

11. The partially automated manufacturing cell (10) of claim 10, wherein said robot (12) is configured to be supplied with said items (20, 22, 24) through a radial or axial conveyor (42, 46) and to store said items (20, 22, 24, 28) within said ring before supplying said items (20, 22, 24, 28) to said workstations (14, 16, 18).

12. A system (48), comprising:
at least two manufacturing cells (10) according to claim 10 or 11, wherein said rings form a figure of eight.

13. A method of supplying items (20, 22, 24, 28) to workstations (14, 16, 18, 26) of a manufacturing cell (10), arranged around an automated warehouse, the method comprising;
storing said items (20, 22, 24, 28) in said warehouse;
detecting that a workstation (14, 16, 18, 26) of said workstations (14, 16, 18, 26) requires one or more of said stored items (20, 22, 24, 28); and
supplying the required one or more items (20, 22, 24, 28) to said workstation (14, 16, 18, 26);
**characterized in that**
said workstation (14, 16, 18, 26) comprises a rack (34) for a plurality of storage bins (36) and wherein said supplying comprises supplying said storage bins (36) containing said stored items (20, 22, 24, 28) to said rack (34), or supplying said stored items (20, 22, 24, 28) to said storage bins (36) in said rack (34).

14. The method of supplying items (20, 22, 24, 28) to workstations (14, 16, 18, 26) of a manufacturing cell (10) according to claim 13, wherein said workstations (14, 16, 18, 26) are arranged along a substantially closed curve with a convex outer side.

## Patentansprüche

1. Teilweise automatisierte Herstellungszelle (10), umfassend:
einen Roboter (12);
eine erste Arbeitsstation (14);
eine zweite Arbeitsstation (16); und
eine dritte Arbeitsstation (18);
wobei die Arbeitsstationen (14, 16, 18) um den Roboter (12) herum angeordnet sind; und
der Roboter (12) konfiguriert ist, um der ersten Arbeitsstation (14) erste Artikel (20), der zweiten Arbeitsstation (16) zweite Artikel (22) und der dritten Arbeitsstation (18) dritte Artikel (24) zuzuführen;
**dadurch gekennzeichnet, dass**
die erste Arbeitsstation (14) ein erstes Regal (34) für eine Vielzahl von ersten Lagerbehältern (36) umfasst, und wobei der Roboter (12) konfiguriert ist, um die ersten Lagerbehälter (36), welche die ersten Artikel (20) enthalten, dem ersten Regal (34) zuzuführen, oder die ersten Artikel (20) den ersten Lagerbehältern (36) im ersten Regal (34) zuzuführen.

2. Teilweise automatisierte Herstellungszelle (10) nach Anspruch 1, wobei der Roboter (12) konfiguriert ist, um auf das erste Regal (34) von einer Rückseite des ersten Regals (34) aus zuzugreifen, und das erste Regal (34) für einen Bediener (C) der ersten Arbeitsstation (14) von einer Vorderseite des ersten Regals (34) aus zugänglich ist.

3. Teilweise automatisierte Herstellungszelle (10) nach Anspruch 2, wobei die erste Arbeitsstation (14) einen ersten Arbeitstisch (32) umfasst und das erste Regal (34) sich über dem ersten Arbeitstisch (32) erstreckt.

4. Teilweise automatisierte Herstellungszelle (10) nach Anspruch 3, wobei der Roboter (12) konfiguriert ist, um die ersten Artikel (20) aus einem ersten Lager (38, 40) zu entnehmen, wobei das erste Lager (38, 40) unter dem ersten Arbeitstisch (32) und/oder über dem ersten Regal (34) angeordnet ist.

5. Teilweise automatisierte Herstellungszelle (10) nach einem der Ansprüche 1 bis 4, wobei die erste Arbeitsstation (14) und die zweite Arbeitsstation (16) nebeneinander angeordnet sind.

6. Teilweise automatisierte Herstellungszelle (10) nach einem der Ansprüche 1 bis 5, wobei die erste Arbeitsstation (14) und die dritte Arbeitsstation (18) auf gegenüberliegenden Seiten des Roboters (12) angeordnet sind.

7. Teilweise automatisierte Herstellungszelle (10) nach einem der Ansprüche 1 bis 6, weiter umfassend:
eine vierte Arbeitsstation (14a);
wobei der Roboter (12) konfiguriert ist, um der vierten Arbeitsstation (14a) vierte Artikel zuzuführen; und
wobei die erste Arbeitsstation (14) über der vierten Arbeitsstation (14a) angeordnet ist, oder die vierte Arbeitsstation (14a) über der ersten Arbeitsstation (14) angeordnet ist.

8. Teilweise automatisierte Herstellungszelle (10) nach einem der Ansprüche 1 bis 7, wobei der Roboter (12) eine Basis (30) aufweist, die stationär oder horizontal unbeweglich ist.

9. Teilweise automatisierte Herstellungszelle (10) nach Anspruch 8, wobei ein erster Abstand (D1) zwischen der ersten Arbeitsstation (14) und der Basis (30) im Wesentlichen gleich einem zweiten Abstand (D2) zwischen der zweiten Arbeitsstation (16) und der Basis (30) ist.

10. Teilweise automatisierte Herstellungszelle (10) nach einem der Ansprüche 1 bis 9, wobei die Arbeitsstationen (14, 16, 18) und eine oder mehrere weitere Arbeitsstationen (26) der Zelle (10) einen Ring um den Roboter (12) herum bilden.

11. Teilweise automatisierte Herstellungszelle (10) nach Anspruch 10, wobei der Roboter (12) konfiguriert ist, um mit den Artikeln (20, 22, 24) über einen radialen oder axialen Förderer (42, 46) versorgt zu werden, und um die Artikel (20, 22, 24, 28) innerhalb des Rings zu lagern, bevor die Artikel (20, 22, 24, 28) den Arbeitsstationen (14, 16, 18) zugeführt werden.

12. System (48), umfassend:
mindestens zwei Herstellungszellen (10) nach Anspruch 10 oder 11, wobei die Ringe die Form einer Acht bilden.

13. Verfahren zum Zuführen von Artikeln (20, 22, 24, 28) zu Arbeitsstationen (14, 16, 18, 26) einer Herstellungszelle (10), die um ein automatisiertes Lagerhaus herum angeordnet sind, wobei das Verfahren umfasst:
Lagern der Artikel (20, 22, 24, 28) in dem Lagerhaus;
Erkennen, dass eine Arbeitsstation (14, 16, 18, 26) der Arbeitsstationen (14, 16, 18, 26) einen oder mehrere der gelagerten Artikel (20, 22, 24, 28) benötigt; und
Zuführen des einen oder mehrerer benötigter Artikel (20, 22, 24, 28) zu der Arbeitsstation (14, 16, 18, 26);
**dadurch gekennzeichnet, dass**
die Arbeitsstation (14, 16, 18, 26) ein Regal (34) für eine Vielzahl von Lagerbehältern (36) umfasst, und wobei das Zuführen das Zuführen der Lagerbehälter (36), die die gelagerten Artikel (20, 22, 24, 28) enthalten, zu dem Regal (34) oder das Zuführen der gelagerten Artikel (20, 22, 24, 28) zu den Lagerbehältern (36) in dem Regal (34) umfasst.

14. Verfahren zum Zuführen von Artikeln (20, 22, 24, 28) zu Arbeitsstationen (14, 16, 18, 26) einer Herstellungszelle (10) nach Anspruch 13, wobei die Arbeitsstationen (14, 16, 18, 26) entlang einer im Wesentlichen geschlossenen Kurve mit einer konvexen Außenseite angeordnet sind.

## Revendications

1. Cellule de fabrication partiellement automatisée (10), comprenant :
un robot (12) ;
un premier poste de travail (14) ;
un deuxième poste de travail (16) ; et
un troisième poste de travail (18) ;
dans laquelle lesdits postes de travail (14, 16, 18) sont agencés autour dudit robot (12) ; et
ledit robot (12) est configuré pour fournir des premiers articles (20) audit premier poste de travail (14), des deuxièmes articles (22) audit deuxième poste de travail (16) et des troisièmes articles (24) audit troisième poste de travail (18) ;
**caractérisée en ce que**
ledit premier poste de travail (14) comprend un premier rayonnage (34) pour une pluralité de premiers bacs de stockage (36) et dans laquelle ledit robot (12) est configuré pour fournir lesdits premiers bacs de stockage (36) contenant lesdits premiers articles (20) audit premier rayonnage (34), ou pour fournir lesdits premiers articles (20) auxdits premiers bacs de stockage (36) dans ledit premier rayonnage (34).

2. Cellule de fabrication partiellement automatisée (10) selon la revendication 1, dans laquelle ledit robot (12) est configuré pour accéder audit premier rayonnage (34) depuis un côté arrière dudit premier rayonnage (34) et ledit premier rayonnage (34) est accessible à un opérateur (O) du premier poste de travail (14) depuis un côté avant dudit premier rayonnage (34).

3. Cellule de fabrication partiellement automatisée (10) selon la revendication 2, dans laquelle ledit premier poste de travail (14) comprend un premier plan de travail (32) et ledit premier rayonnage (34) s'étend au-dessus dudit premier plan de travail (32).

4. Cellule de fabrication partiellement automatisée (10) selon la revendication 3, dans laquelle ledit robot (12) est configuré pour extraire lesdits premiers articles (20) d'un premier magasin (38, 40), dans laquelle ledit premier magasin (38, 40) est agencé sous ledit premier plan de travail (32) et/ou au-dessus dudit premier rayonnage (34).

5. Cellule de fabrication partiellement automatisée (10) selon l'une quelconque des revendications 1 à 4, dans laquelle ledit premier poste de travail (14) et ledit deuxième poste de travail (16) sont agencés côte à côte.

6. Cellule de fabrication partiellement automatisée (10) selon l'une quelconque des revendications 1 à 5, dans laquelle ledit premier poste de travail (14) et ledit troisième poste de travail (18) sont agencés sur des côtés opposés dudit robot (12).

7. Cellule de fabrication partiellement automatisée (10) selon l'une quelconque des revendications 1 à 6, comprenant en outre :
un quatrième poste de travail (14a) ;
dans laquelle ledit robot (12) est configuré pour fournir des quatrièmes articles audit quatrième poste de travail (14a) ; et
dans laquelle ledit premier poste de travail (14) est agencé au-dessus dudit quatrième poste de travail (14a), ou ledit quatrième poste de travail (14a) est agencé au-dessus dudit premier poste de travail (14).

8. Cellule de fabrication partiellement automatisée (10) selon l'une quelconque des revendications 1 à 7, dans laquelle ledit robot (12) présente une base (30) qui est fixe ou immobile horizontalement.

9. Cellule de fabrication partiellement automatisée (10) selon la revendication 8, dans laquelle une première distance (D1) entre ledit premier poste de travail (14) et ladite base (30) est sensiblement égale à une seconde distance (D2) entre ledit deuxième poste de travail (16) et ladite base (30).

10. Cellule de fabrication partiellement automatisée (10) selon l'une quelconque des revendications 1 à 9, dans laquelle lesdits postes de travail (14, 16, 18) et un ou plusieurs autres postes de travail (26) de ladite cellule (10) forment un cercle autour dudit robot (12).

11. Cellule de fabrication partiellement automatisée (10) selon la revendication 10, dans laquelle ledit robot (12) est configuré pour être approvisionné en lesdits articles (20, 22, 24) par l'intermédiaire d'un convoyeur radial ou axial (42, 46) et pour stocker lesdits articles (20, 22, 24, 28) à l'intérieur dudit cercle avant de fournir lesdits articles (20, 22, 24, 28) auxdits postes de travail (14, 16, 18).

12. Système (48), comprenant :
au moins deux cellules de fabrication (10) selon la revendication 10 ou 11, dans lequel lesdits cercles forment un huit.

13. Procédé d'approvisionnement en articles (20, 22, 24, 28) vers des postes de travail (14, 16, 18, 26) d'une cellule de fabrication (10), agencés autour d'un entrepôt automatisé, le procédé comprenant ;
le stockage desdits articles (20, 22, 24, 28) dans ledit entrepôt ;
la détection qu'un poste de travail (14, 16, 18, 26) parmi lesdits postes de travail (14, 16, 18, 26) nécessite un ou plusieurs desdits articles stockés (20, 22, 24, 28) ; et
la fourniture des un ou plusieurs articles requis (20, 22, 24, 28) audit poste de travail (14, 16, 18, 26) ;
**caractérisé en ce que**
ledit poste de travail (14, 16, 18, 26) comprend un rayonnage (34) pour une pluralité de bacs de stockage (36) et dans lequel ledit approvisionnement comprend la fourniture desdits bacs de stockage (36) contenant lesdits articles stockés (20, 22, 24, 28) audit rayonnage (34), ou la fourniture desdits articles stockés (20, 22, 24, 28) auxdits bacs de stockage (36) dans ledit rayonnage (34).

14. Procédé d'approvisionnement en articles (20, 22, 24, 28) vers des postes de travail (14, 16, 18, 26) d'une cellule de fabrication (10) selon la revendication 13, dans lequel lesdits postes de travail (14, 16, 18, 26) sont agencés le long d'une courbe sensiblement fermée avec un côté extérieur convexe.
